**Europäisches Patentamt**

**European Patent Office**

**Office européen des brevets**

(19)

(11) Veröffentlichungsnummer: **0 126 205**
**B1**

(12) ## EUROPÄISCHE PATENTSCHRIFT

(45) Veröffentlichungstag der Patentschrift:
02.09.87

(51) Int. Cl.⁴: **G 11 B 23/02**

(21) Anmeldenummer: **84100818.8**

(22) Anmeldetag: **10.03.83**

(54) Behälter zum Aufbewahren einer Magnetbandkassette.

(30) Priorität: **28.04.82 DE 3215721**

(43) Veröffentlichungstag der Anmeldung:
**28.11.84 Patentblatt 84/48**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**DE-A-3 015 749**
**DE-B-2 248 408**
**GB-A-1 475 988**
**US-A-3 603 478**

(73) Patentinhaber: **fischer- werke Artur Fischer GmbH & Co. KG, Weinhalde 14- 18, D-7244 Tumlingen/Waldachtal 3 (DE)**

(72) Erfinder: **Bohnet, Klaus, Lützenhardter Mühle, D-7244 Waldachtal (DE)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

## Beschreibung

Die Erfindung betrifft einen Behälter zum Aufbewahren einer Magnetbandkassette, die bei geschlossenem Behälter von Wandungen des Behälters verdeckt ist, der eine optisch/taktile Anzeigeeinrichtung aufweist, welche durch Einsetzen der Kassette in den Behälter umsteuerbar ist, wobei die jeweils einen Teil eines beweglichen Behälterverschlusses bildenen Behälterstirnwandungen freiliegen. Ein solcher Behälter ist aus der US-A-3 603 478 bekannt.

Der bekannte Behälter umfaßt ein kastenartiges Gehäuse mit einzelnen Aufnahmefächern für je eine Magnetbandkassette. Jedem Fach ist ein Klappdeckel zugeordnet, aus dem durch einen etwa U-förmigen Durchbruch eine Lamelle ausgeschnitten ist. Diese Lamelle soll mit ihrem freien Ende bei geschlossenem Behälter, wenn also der Klappdeckel die zugeordnete Gehäuseöffnung verschließt, in den Innenraum des Behälters vorgespannt sein. Ist das betreffende Aufnahmefach leer, das heißt, es enthält keine Kassette, so verharrt die Lamelle in dieser Position. Befindet sich jedoch eine Kassette in diesem Fach, stößt die Lamelle an ihr an und wird verbogen, bis sie etwa bündig mit der Klappdeckelfläche ist. Der Benutzer soll dann durch Abtasten feststellen können, welche Fächer leer oder belegt sind.

Diese Ausbildung der Anzeigeeinrichtung weist verschiedene Nachteile auf. Der wichtigste ist funktioneller Natur; die Anzeigeeinrichtung ist nämlich tatsächlich nur durch Abtasten wirklich erkennbar, während bei bloßer visueller Inspektion kaum erkennbar ist, welche Position die Lamellen tatsächlich einnehmen. Dieser Nachteil wird dadurch verstärkt, daß der Behälter ein einstückiges Formteil sein soll, bei dem also das Gelenk des Klappdeckels mit angespritzt ist ebenso wie die Lamelle selbst. Dafür kommt als Material nur Kunststoff infrage, der bekanntlich zum Kaltfließen neigt. Wird also die Lamelle längere Zeit ausgelenkt - und dies ist in der Praxis wohl meist der Fall, weil von allen in einem Behälter untergebrachten Kassetten allenfalls eine in Benutzung sein wird -, so kehrt sie nach Entnehmen der Kassette aus dem ihr zugeordneten Fach nicht mehr oder jedenfalls nicht mehr vollständig in die "Leeranzeige"-Position zurück, so daß die Anzeige immer unsicherer wird. Schließlich wird die Anzeige noch dadurch unsicher, daß der Innenraum des Behälters auf die größtmöglichen Abmessungen der Kassette abzustellen ist; da diese Größen aber - konstruktiv oder wegen Fertigungstoleranzen - nach unten abweichen können, kann bei gefülltem Fach auch einmal eine Lamelle nur teilweise ausgelenkt sein, so daß die Anzeige nicht mehr eindeutig ist.

Aufgabe der vorliegenden Erfindung ist es, einen Behälter der genannten Gattung zu schaffen, der eine eindeutige und alterungsunabhängige Anzeige des Füllungszustandes ermöglicht.

Diese Aufgabe wird gemäß der Erfindung dadurch gelöst, daß für die bewegliche Stirnwand eine zwischen der vollständig geschlossenen und der vollständig geöffneten Position liegende, einen leeren Behälter anzeigende Zwischenposition vorgesehen ist, und daß Sperrmittel zum Verhindern der Bewegung der Stirnwand aus der Zwischenposition in die vollständig geschlossene Position vorgesehen sind, welche durch Einsetzen der Kassette in eine Entsperrstellung bringbar sind.

In der Stammanmeldung EP-A-92 666 sind Kassettenbehälter mit einer Einrichtung die anzeigt, ob sich in einem geschlossenen Behälter Kassetten befinden, dargestellt.

Ein Ausführungsbeispiel des Gegenstandes der Erfindung wird nachstehend unter Bezugnahme auf die beigefügten Zeichnungen im einzelnen erläutert.

Dabei wird von einer Behälterbauart ausgegangen, die unter der Bezeichnung "cbox" handelsüblich ist und im Detail in der DE-C-2 248 408 beschrieben ist. Ein solcher Behälter umfaßt ein im wesentlichen quaderförmiges, auf einer Schmalseite offenes Gehäuse sowie einen zur Aufnahme der Kassette bestimmten Schieber, der mit seiner Stirnwand bei eingeschobenem Schieber die offene Gehäuseseite verschließt. Eine Feder spannt den Schieber in eine ausgefahrene, durch Anschläge festgelegte Position vor, und eine Verriegelungseinrichtung hält den Schieber gegen die Federvorspannung im Gehäuse. Die Verriegelung ist durch manuelles Betätigen einer Taste entriegelbar.

Fig. 1 zeigt perspektivisch, von schräg oben nach unten gesehen, den frontseitigen Abschnitt des erfindungsgemäß modifizierten "cbox"-Behälters,

Fig. 2 ist ein schematischer Vertikalschnitt durch den Behälter nach Fig. 1 in der Anzeigeposition "leer", und

Fig. 3 stellt analog zu Fig. 2 die Anzeigeposition "belegt" dar.

Die Anzeige "belegt" bzw. "leer" erfolgt dadurch, daß sich der Schieber des cbox-Behälters nur dann vollständig schließen läßt, wenn eine Kassette eingelegt ist, jedoch um einige Millimeter vorsteht, wenn er leer ist.

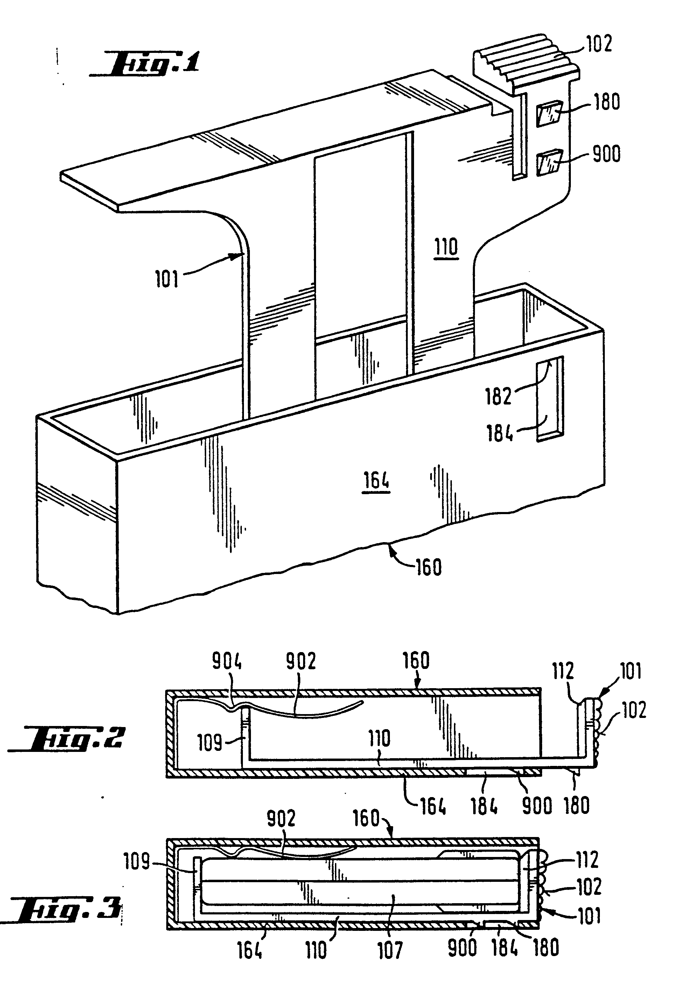

An die Taste 102 des Schiebers ist normalerweise ein einziger Haken 180 angeformt, mit dem sich der vollständig eingeschobene Schieber 101 an einer Kante 182 eines im Gehäuseboden 164 vorgesehenen Durchbruchs 184 verriegelt. In der erfindungsgemäß modifizierten Ausführungsform ist nun noch ein zweiter Haken 900 hinter dem Haken 180 ausgebildet, so daß der Schieber 101 auch in einer nicht ganz vollständig eingeschobenen Stellung arretierbar ist (Fig. 2).

Im Innern des Gehäuses 160 ist ein Anschlag vorgesehen, der bei entnommener Kassette das Einschieben des Schiebers nur bis zu dieser, dem Haken 900 zugeordneten Position zuläßt, jedoch durch Einlegen einer Kassette unwirksam gemacht wird. Hierzu dient eine im Gehäuse befestigte Blattfeder 902, an die ein Anschlagwinkel 904 angeformt ist, auf den die Schieberrückwand 109 aufläuft, wenn nicht eine eingelegte Kassette die Feder 902 deformiert und damit den Haken 904 aus der Bewegungsbahn des Schiebers wegdrückt (Fig. 3).

**Patentansprüche**

1. Behälter zum Aufbewahren einer Magnetbandkassette, die bei geschlossenem Behälter von Wandungen des Behälters verdeckt ist, der eine optische und taktile Anzeigeeinrichtung aufweist, welche durch Einsetzen der Kassette (107) in den Behälter umsteuerbar ist, wobei die jeweils einen Teil eines beweglichen Behälterverschlusses bildenden Behälterstirnwandungen (112) freiliegen, dadurch gekennzeichnet, daß für die bewegliche Stirnwand (112) eine zwischen der vollständig geschlossenen und der vollständig geöffneten Position liegende, einen leeren Behälter anzeigende Zwischenposition vorgesehen ist, und daß Sperrmittel (902, 904) zum Verhindern der Bewegung der Stirnwand aus der Zwischenposition in die vollständig geschlossene Position vorgesehen sind, welche durch Einsetzen der Kassette (107) in eine Entsperrstellung bringbar sind.

**Claim**

1. A container for preserving a magnetic tape cassette, which, with the container closed, is covered by walls of the container, which has an optical and tactile indicator which is reversible by insertion of the cassette (107) in the container, where the container endwalls (112) forming respectively one part of a movable container closure are exposed, characterised in that for the movable endwall (112) an intermediate position lying between the fully closed and the fully opened positions is provided to indicate an empty container, and that blocking means (902, 904) for preventing the movement of the endwall out of the intermediate position into the fully closed position are provided, which by insertion of the cassette (107) may be brought into an unblocking position.

**Revendications**

1. Bac destiné à contenir une cassette à bande magnetique, clos par les parois du bac lorsque ce dernier est fermé, comportant un dispositif indicateur optique et tactile réversible par introduction de la cassette (107) dans le bac et dans lequel les parties frontales (112) qui forment une partie du dispositif de fermeture mobile du bac sont libres, caractérisé par le fait qu'il est prévu une position intermédiaire de la face frontale mobile (112) indiquant la vacuité du bac, comprise entre la position entièrement fermée et la position entièrement ouverte et que sont prévus des moyens de blocage (902, 904) pour empêcher que le face frontale ne quitte la position intermédiaire pour prendre la position complètement fermée, ces moyens pouvant être déverrouillés à la mise en place de la cassette (107).

**Fig.1**

102
180
900
101
110
182
184
164
160

**Fig.2**

904  902  160  112  101
102
109  110
164  184  900  180

**Fig.3**

902  160
109  112
102
101
164  110  107  900  184  180

1